# EUROPEAN PATENT APPLICATION

(11) **EP 1 561 611 A1**
(43) Date of publication of application: **10.08.2005**
(21) Application number: 05001667.4
(22) Date of filing: 27.01.2005
(51) Int. Cl.: B60G 7/00, B60G 3/14, B60G 3/24, B62D 7/18

(54) **Trailing arm suspension for motor-vehicles with rocking and steering support for the wheel hub**

(30) Priority: 06.02.2004 IT TO20040059
(71) Applicant: FIAT AUTO S.p.A., 10135 Torino (IT)
(72) Inventor: Asteggiano, Valter, 12060 Pocapaglia (CN) (IT); Sandri, Silvano, Fiat Auto S.p.A., 10135 Torino (IT)
(74) Representative: Di Francesco, Gianni

(57) **Abstract**

A trailing arm suspension for motor-vehicles provided with rocking and steering support for the hub, consisting of a connection element (18), rotatably connected to the arm of the suspension, and connected to a steering rod adapted to control its movement. A plate element supporting the wheel-hub on an axle (28) supported into a seat made on the connection element. The connection element and the plate element (30) rotate on two planes which are mutually perpendicular.

## Description

### DESCRIPTION OF THE INVENTION

The present invention refers to a trailing arm suspension for motor-vehicles with rocking and steering support for the wheel hub, intended to improve comfort for passengers as well as stability of the motor vehicle. Said suspension is intended to take up the longitudinal impacts on the wheel of the motor-vehicle which are due to the impact of the wheel itself against upward projecting bumps of the road. The support is articulated at the end of the arm of the suspension, so that steering movements and longitudinal oscillations of the wheel in relationship to the arm itself can take place.

Presently, trailing arm suspensions of motor vehicles consist of a longitudinal arm the ends of which are connected to the bodywork and the wheel hub respectively. The ends of the arm which are not connected to the wheel, are connected to the bodywork by means of bushings or bearings which sometimes are locked on an intermediate structure called frame.

Such a trailing arm suspension presents many advantages in terms of costs of production and reduced size, yet implies also drawbacks since it is impossible to steer and count on good longitudinal flexibility without varying the steering under the action of the cornering/braking load. It can be said that modern suspensions are characterised by growing levels of longitudinal flexibility of the wheel in order to achieve better taking up of the longitudinal impacts. Designers have been influenced by this tendency so that suspensions more and more sophisticated have been produced, these suspensions being yet highly expensive.

Trailing arm suspensions have proved not to be adapted to manage comfort and maneuverability separately. Actually, the use of more flexible bushings for attachment to the bodywork has negative effects on the maneuverability of the motor-vehicle, that is causes divergence under the effect of side loads, asymmetrical braking longitudinal loads and asymmetrical longitudinal loads in the middle of the wheel. Besides, the implementation on motor vehicles of active controls for steering for rear axles also, requires that these allow wheels to steer by 6÷7 grade angles.

It is an object of the present invention to provide a suspension with support for the hub that allows certain clearance of movement between the hub of the wheel and the body of the suspension, thus allowing longitudinal mutual displacements between the two parts that prevent unwanted cornering angles of the wheel subject to an impact.

It is a further object of the invention to provide a suspension that according to the will of the driver allows cornering angles of the wheel which are controlled by a steering actuator, by means of a tension rod.

These and further objects are achieved by means of the present invention the object of which is to provide a trailing arm suspension for motor-vehicles with rocking and steering support for the wheel hub presenting the characteristics set forth in claim 1.

Further characteristics and advantages will appear clearly from the following description, referred to the appended drawings, provided as non restrictive example and in which:

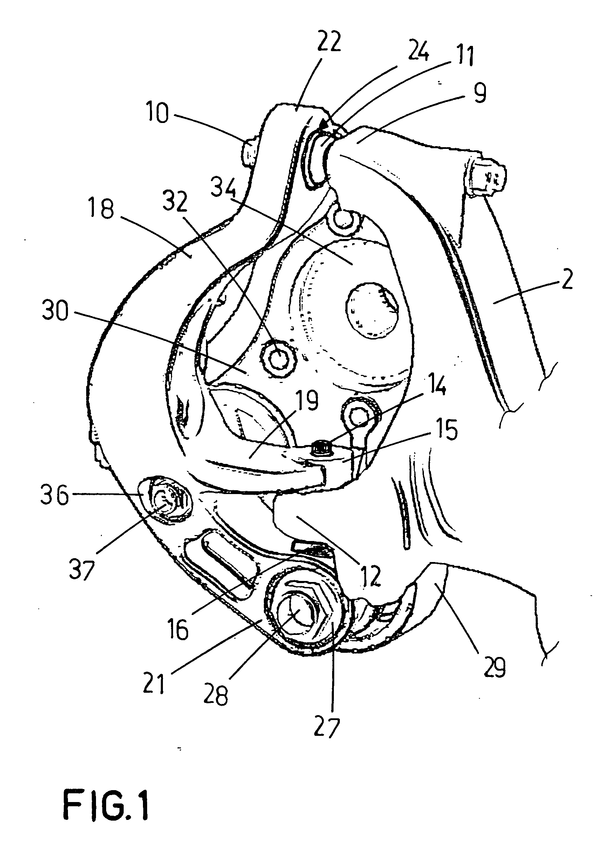

figure 1 is a perspective view of a preferred embodiment of the support of the hub of the trailing arm suspension of the invention, including the part allowing the rocking of the hub of the wheel;
figure 2 is a view of the embodiment of the support of the hub of the suspension according to the invention from the side opposite to that of figure 1, with part of the trailing arm suspension provided with steering control;

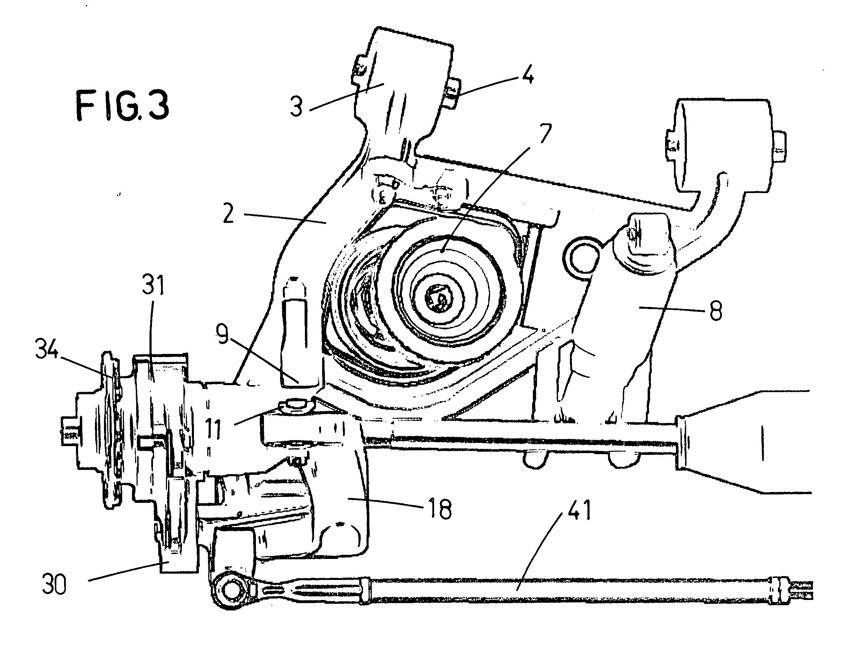

figure 3 is a top view of the suspension shown in figure 2 without the steering control, here replaced by a fixed rod.

With reference to the figures, reference number 2 indicates one of the two rocking arms of a trailing arm suspension for motor vehicles. One of the ends of said arm is connected to the bodywork of the motor-vehicle, or to an intermediate frame, by means of a pin 4. A spring 7 supporting the bodywork of the motor-vehicle and a shock absorber 8 that dampens the oscillations of said spring, are connected directly or by means of arms/secondary frames, both to the bodywork and the rocking arm 2. The rocking arm 2 splits from the end 3 into two arms forming a sort of laying V facing the rear part of the motor-vehicle. The end 9 of the upper branch 2, is provided with a pin 10 supporting a spherical joint 11. The end 12 of the lower branch 2 is provided with a cylindrical seat in which a spherical joint rotates, the joint being retained by a pin 14. Said pin 14 is housed in two coaxial seats 15 and 16, made into a connection element 18 presenting the shape of curved arm covering a arch of a circle of 180°. More in particular, the seat 15 is made at the end of a small arm 19 protruding into the concave part of the connection element 18 and extending till its lower end 21 where the second seat 16 of the pin 14 is located. The other upper end 22 of the connection element is provided with a seat 24 adapted to house the spherical joint 11 supported by the upper branch of the rocking arm 2, so that the connection element is adapted to achieve rotation angles of 6-7 grades as a maximum, as allowed by the spherical joints 11 and 14.

The end 21 of the arm-shaped connection element presents a cylindrical seat where at least a pair of spherical bearings 27 are housed, the bearings being adapted to rotatably support a pin 28 perpendicular to the plane passing through the axis of the pin 14, either planted into them or connected in some other known way. According to the invention, the pin 28 is integral with a first point 29 which is the end of a metal plate element 30 the form of which is basically that of an elongated triangle. A second point 31 of the plate 30, which, when in use, is facing upwards as to the arm 2 of the suspension, is provided with attachments 32 for a hub 34 of the wheel, facing outwards. A third point 35 of the metal plate 30 is connected to the connection element 18 in a seat 36 by means of a control element 18 in a seat 36 by means o an element controlling the rotation and consisting of a pin 37 which is kept into a bushing 38 of predefined elasticity, housed into a seat 39 made in said plate. The bushing 38 can of course be positioned on the connection element 18 and the pin 37 can be fixed to the plate 30, without going beyond the scope of the present invention. According to the invention the plate 30, while in use, can oscillate forwards and backwards, according to the direction in which the motor-vehicle is moving, around the axis determined by the pin 28 inserted into the bearings 27, without making the wheel steer. This oscillation will be controlled thanks to the elasticity of the bushing 38 on which the plate is operating.

This type of device then guarantees that the suspension takes up the longitudinal impacts on the wheel of the motor-vehicle which are due to the impact of the wheel itself against upward projecting bumps of the road.

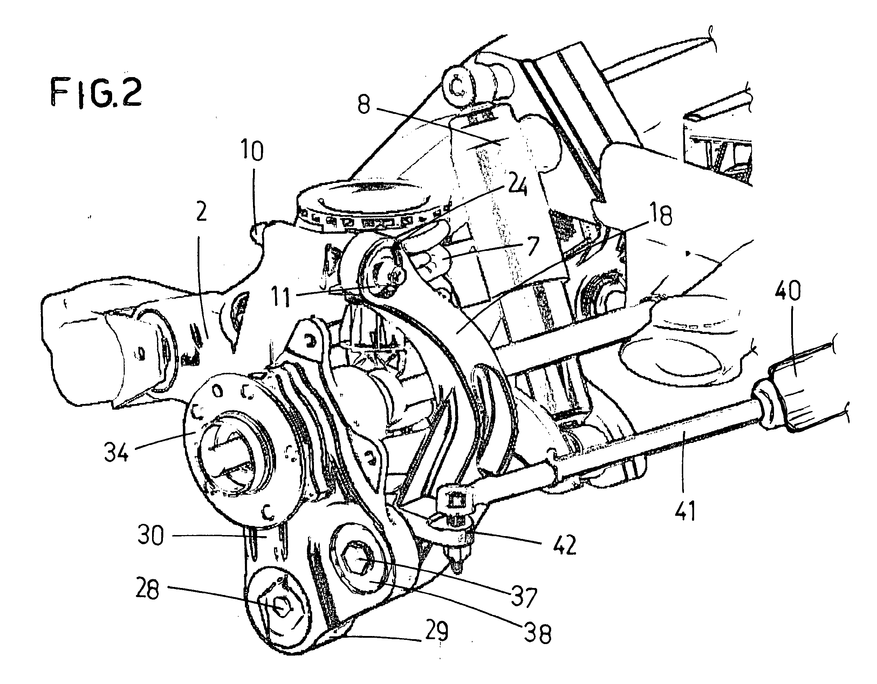

Besides, the whole support for the hub, consisting of the arm 18 and the plate 30, rotatably connected the one to the other, can rotate around the axis defined by the joint 11 inserted into the seat 24 and the joint 14 located between the elements 15 and 16; both joints are fixed by means of pins to the rocking arm 2. The steering is controlled by an actuator 40 (figure 2), preferably an electric one, which by means of a steering rod 41, causes the displacement of a steering lever 42 either rotatably connected to the arm supporting the hub 18 or integral with it.

In this way the conventional bushings of the suspension do not control any longer the longitudinal flexibility of the axle, having a very high radial rigidity to nullify their effect on the divergence of the wheel and instead control the stability of the motor vehicle. With a reduced increase in weight, the device according to the invention allows to highly improve comfort for passengers. Figure 4 shows a less sophisticated and less expensive embodiment of the device according to the invention, in which the steering rod causing the rotation of the block of the arm supporting the wheel-hub 10 and the plate 10 in the previous embodiment, is locked by a small arm 43 connected to the frame of the suspension. In this embodiment the designer is not making use of the possibility of the rear wheel to steer.

It is to be understood that shape, dimensions and components of the device here shown can vary within the scope of the present invention as set forth in the appended claims. It is also to be understood that the invention is not restricted to the embodiments here described and shown being this presented as non-restrictive examples only since their shape, location of parts and construction and assembly details can be modified within the scope of the invention.

## Claims

1. Trailing arm suspension for motor-vehicles with rocking and steering support for the wheel-hub, **characterized in that** the support for the hub consists of a connection element (18) the shape of which is that of a curved arm and which is rotatably connected to the longitudinal arm of the suspension along an axis (11, 14) basically perpendicular to the ground and provided with a seat for the rotation axis (28) of a plate element (30) supporting the wheel-hub (34) and adapted to rotate on an axis basically perpendicular to the axis of rotation of said connection element (18) the rotation of which is limited by a control element (37, 38) of predetermined elasticity.

2. Suspension as claimed in claim 1, **characterized in that** the longitudinal arm (2) of the suspension splits into an upper and a lower branch, and that the end of the two branches are rotatably connected to the connection element (18), the lower branch being connected by means of a spherical joint (14) and the upper branch being connected by means of a spherical joint (11).

3. Suspension as claimed in claim 1, **characterized in that** the seat on which the axis of rotation (28) of the plate element (30) rotates, is located at the lower end (21) of the connecting arm (18).

4. Suspension as claimed in claim 1 and claim 3, **characterized in that** the axis of rotation (28) of the plate element (30) rotates on bearings.

5. Suspension as claimed in claim 1, **characterized in that** the control element of predefined elasticity consists of a bushing (38) made of elastic material and supported on the plate element (30), against which pushes a pin (37) fixed to said connection element (18) into a seat (36) located between its two ends (21, 22).

6. Suspension as claimed in claim 1 and claim 5, **characterized in that** the bushing (38) made of elastic material is supported by the connection element (18) and the pin (37) is fixed to the plate (30).

7. Suspension as claimed in claim 1, **characterized in that** the connection element is provided with a steering lever (42) that can be connected to a steering rod (41) operated by an actuator.

8. Suspension as claimed in claim 1 and claim 7, **characterized in that** the steering lever (42) of the connection element (18) is coupled to a small arm (42) rigidly connected to the point of attachment of the suspension consisting of a frame or the bodywork.
